# EUROPÄISCHE PATENTSCHRIFT

(11) **EP 0 567 494 B1**
(45) Veröffentlichungstag und Bekanntmachung des Hinweises auf die Patenterteilung: **26.04.1995**
(21) Anmeldenummer: 92902396.8
(22) Anmeldetag: 13.01.1992
(51) Int. Cl.: H02J 13/00

(54) **ANORDNUNG ZUR PRÜFUNG UND EINSTELLUNG VON RUNDSTEUEREMPFÄNGERN**
DEVICE FOR TESTING AND ADJUSTING RIPPLE CONTROL RECEIVERS
DISPOSITIF POUR LE CONTROLE ET LE REGLAGE DE RECEPTEURS DE TELECOMMANDE CENTRALISEE

(30) Priorität: 14.01.1991 AT 57/91
(43) Veröffentlichungstag der Anmeldung: 03.11.1993
(73) Patentinhaber: UHER Aktiengesellschaft für Zähler und elektronische Geräte, A-1194 Wien (AT)
(72) Erfinder: HOPFMÜLLER, Gebhard, A-2540 Bad Vöslau (AT)
(74) Vertreter: Atzwanger, Richard, Dipl.-Ing. Patentanwalt
(86) Internationale Anmeldenummer: EP9200049
(87) Internationale Veröffentlichungsnummer: WO9212565

(56) Entgegenhaltungen:
- WO-A-89/12345
- DE-A- 3 031 163

## Beschreibung

Die Erfindung betrifft eine Anordnung zur Prüfung und Einstellung von Rundsteuerempfängern mittels tonfrequenter Prüftelegramme und mittels digitaler Datenein- und -ausgabe, wobei am Rundsteuerempfänger ein gemeinsamer Signalanschluß sowohl für die Eingabe von Prüftelegrammen als auch für die Ein- und Ausgabe von Digitalsignalen vorgesehen ist.

Bekanntlich dienen Rundsteueremfpänger zur Ausführung von Schaltbefehlen, die in Form von tonfrequenten Telegrammen der Netzwechselspannung überlagert werden, beispielsweise zur Fernein- und -ausschaltung elektrischer Heizungen. Hierzu hat jeder Rundsteuerempfänger eine individuelle Befehlseinstellung, die erstmalig eingestellt, gelegentlich überprüft und allenfalls geändert werden muß. Hierzu wurden bisher entweder mechanische Einstellorgane oder gesteckte elektronische Speicherbauteile (PROM,EEPROM) verwendet. Es ist aber auch bekannt, die Einstellorgane mit Hilfe einer mehrpoligen steckbaren Verbindung zu einem Programmiergerät mit den erforderlichen Daten zu versehen. Die richtige Reaktion von Rundsteuerempfängern auf tonfrequente Telegramme wird mit Hilfe von Prüftelegrammen getestet, wobei die tonfrequente Spannung entweder über das mehrpolig angeschlossene Programmiergerät oder über eine Zusatzklemme eingespeist wird. Hierzu ist es bekannt geworden, über einen eigenen Kontakt ein tonfrequentes Prüfprogramm von einem Taschensender aus in den Rundsteuerempfänger zu führen, um die korrekte Funktion zu verifizieren.

Zum Stand der Technik sind folgende zwei Schriften bekannt geworden:

Die WO-A-89 12345 betrifft eine Fernüberwachungseinrichtung für ein Verteilungssystem, in welchem durch Fernmanipulation mittels eines Diagnosegerätes verschiedene Zustände simuliert werden können, deren Richtigkeit durch die Fernüberwachung überprüft wird, wobei für die Datenübertragung ein separater Kanal vorgesehen ist. Über diesen Kanal werden ausschließlich digitale Informationen versendet.

In der DE-A-30 31 163 ist eine Ansteuereinrichtung für Rundsteuerempfänger mit einem veränderbaren Ausgangsglied (z.B. für die Anschnittsteuerung einer Last) beschrieben, wobei in der Schrift keine Aussage über die Einstellung oder Prüfung des Rundsteuerempfängers enthalten ist.

Die Erfindung hat sich die Aufgabe gestellt, einen gemeinsamen Signalanschluß sowohl für die Eingabe von Prüftelegrammen als auch für die Ein- und Ausgabe von Digitalsignalen vorzusehen und dabei Störungen durch Signale verschiedener Arten zu vermeiden.

Die dies ermöglichende Anordnung ist dadurch gekennzeichnet, daß die Werte der die Prüftelegramme einerseits und die Digitalsignale anderseits repräsentierenden Spannungen stark unterschiedliche Signalpegel aufweisen, wobei wechselseitige Störungen der auf diese unterschiedlichen Spannungen ansprechenden Einrichtungen durch erhöhte Ansprechschwellwerte oder durch Schutzdioden unterbunden sind. Dadurch können nicht nur sämtliche analogen und digitalen Spannungen über eine einzige Signalanschlußklemme geführt werden. Es bietet sich darüberhinaus der konstruktive Vorteil an, die gemeinsame Signalanschlußklemme zusammen mit den übrigen Klemmen des Rundsteuerempfängers im gleichen Klemmenbereich anzuordnen.

Nach weiteren Merkmalen der Erfindung ist es zur Unterscheidung zwischen Digitalsignalen und tonfrequenten Signalen zweckmäßig, entweder den tonfrequenten Signalen eine Signalgleichspannung zu überlagern oder den Signalpegel der tonfrequenten Signale kleiner zu halten als die Schaltschwelle der auf die Digitalsignale ansprechenden Einrichtungen.

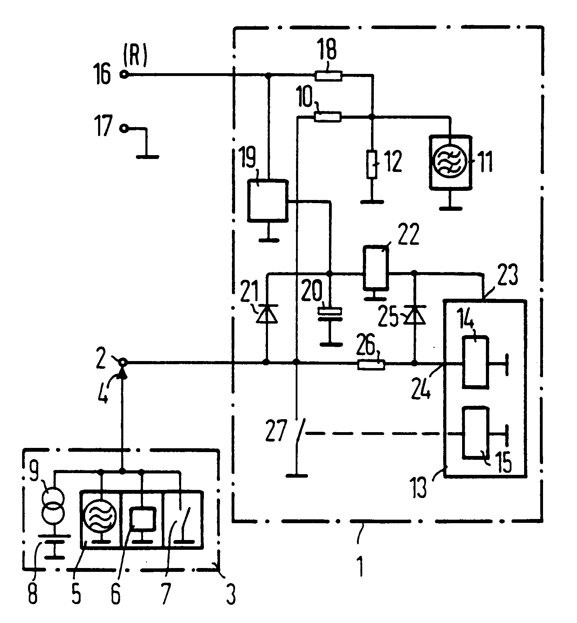

Ein Ausführungsbeispiel der Erfindung ist in der Zeichnung dargestellt. Mit strichlierten Linien sind die zu einem Rundsteuerempfänger 1 gehörenden Schaltungsbestandteile abgegrenzt. Der für den Empfang sowohl von Prüftelegrammen als auch von Digitalsignalen dienende Signalanschluß ist mit 2 bezeichnet. Zum Zwecke der Prüfung und der Einstellung des Rundsteuerempfängers 1 kann an den Signalanschluß 2 ein Prüfgerät 3 mittels einer Prüfklemme 4 angeschlossen werden, das im einzelnen einen Tonfrequenzsender 5, einen Datenempfänger 6 und einen Datengeber 7 enthält, die beide für den Empfang bzw. die Ausgabe digitaler Signale vorgesehen sind. Zur Speisung dieser Geräte sowie angeschlossener Geräte im Rundsteuerempfänger 1 dient eine Gleichspannungsquelle 8 mit vorgeschaltetem Strombegrenzer 9, der eine Sicherung der Gleichspannungsquelle 8 gegen Kurzschlüsse bewirkt.

Innerhalb des Rundsteuerempfängers 1 befindet sich ein über einen hochohmigen Widerstand 10 an den Signalanschluß 2 angeschlossenes Tonfrequenzfilter 11 (Bandpaßfilter), dem ein niederohmiger Widerstand 12 parallel geschaltet ist. Für die Verarbeitung der digitalen Daten ist ein Mikrocomputer 13 vorgesehen, der u.a. einen Datenempfänger 14 und einen Datengeber 15 enthält.

Mit 16 ist der beispielsweise an die Phase R angeschlossene Netzspannungseingang bezeichnet, der als Gegenpol den Nulleiter 17 aufweist. Vom Netzspannungseingang 16 gelangen im normalen Betrieb die Rundsteuersignale über einen hochohmigen Widerstand 18 an den Eingang des Tonfrequenzfilters 11, dem die weiteren, in der Zeichnung nicht dargestellten Einrichtungen zur Auswertung der Rundsteuersignale nachgeschaltet sind. An den Netzspannungseingang 16 ist weiters ein die Versorgungsspannung für die mit Niederspannung betriebenen Schaltungselemente lieferndes Netzgerät 19 angeschlossen, dessen Ausgangs-Gleichspannung mittels eines Ladekondensators 20 stabilisiert wird. Der Ausgang des Netzgerätes 19 ist gegenüber dem Signalanschluß 2 mittels einer die Überspannungen ableitenden Diode 21 gesichert. Der Mikrocomputer 13 bedarf einer besonders fein stabilisierten Speisespannung, die von einem an den Ausgang des Netzgerätes 19 angeschlossenen Spannungsregler 22 geliefert wird. Der mit 23 bezeichnete Speisespannungs-Eingang des Mikrocomputers 13 ist gegenüber dem mit 24 bezeichneten Dateneingang des Datenempfängers 14 mittels einer spannungsbegrenzenden Diode 25 gesichert. Ein zwischen dem Signalanschluß 2 und dem Dateneingang 24 geschalteter Vorwiderstand 26 begrenzt den Signalpegel am Datenempfänger 14. Mit 27 ist ein elektronischer Schalter bezeichnet, der vom Datengeber 15 des Mikrocomputers 13 gesteuert wird und im durchgeschalteten Zustand den Signalanschluß 2 (Signaleinspeisepunkt) gegen Masse kurzschließt.

Im normalen Betriebszustand ist der Phasenanschluß 16 der Phase R der Einwirkung des aus dem Netz abgeleiteten Rundsteuersignales ausgesetzt, das über den Widerstand 18 an das Filter 11 gelangt und mit dessen Hilfe auf nicht näher dargestellte Weise ausgewertet wird. In diesem Zustand wird die Spannungsversorgung des Rundsteuerempfängers 1 durch das Netzgerät 19 gewährleistet.

Im Falle einer Überprüfung des Rundsteuerempfängers 1 wird an den Signalanschluß 2 das Prüfgerät 3 mittels der Prüfklemme 4 vorübergehend angeschlossen. Zugleich wird auch das Grundpotential der im Prüfgerät 3 befindlichen einzelnen Geräte 5,6 und 7 sowie der Gleichspannungsquelle 8 mit dem Grundpotential der im Rundsteuerempfänger 1 befindlichen Schaltungselemente 11, 12, 14, 15, 17, 19, 20, 22 und 27 leitend verbunden. Während der Überprüfung wird der Rundsteuerempfänger 1 mit dem Phasenanschluß 16 von der Phase R getrennt. Das Ruhepotential des Signalanschlusses 2 ist auch im abgeschalteten Zustand des Rundsteuerempfängers 1 so hoch, daß daraus über die Diode 21 und den Ladekondensator 20 die gesamte Spannungsversorgung des Rundsteuerempfängers 1 erfolgen kann. Bei einem Prüfvorgang wird die Empfindlichkeit des Filters 11 mit Hilfe des im Prüfgerät 3 befindlichen Tonfrequenzsenders 5 getestet.

Die Reaktionen des Rundsteuermpfängers 1 auf die digitalen Datensendungen des Tonfrequenzsenders 5 werden durch den im Mikrocomputer 13 befindlichen Datengeber 15 erzeugt, der mittels des elektronischen Schalters 27 gemäß einem vorgegebenen Programmcode im Takt der hierfür vorgegebenen Digitalsignale die Signalspannung am Signalanschluß 2 durch Herstellung einer Ableitung zum Grundpotential herabsetzt. Diese in Impulsen erfolgende Spannungsreduktionen am Signalanschluß 2 werden von dem im Prüfgerät 3 befindlichen Signalempfänger 6 erkannt und in entsprechender Weise ausgewertet.

In ähnlicher Weise erfolgt die Dateneingabe vom Prüfgerät 3 in den Mikrocomputer 13 des Rundsteuerempfängers 1 und zwar mit Hilfe von Kontaktschlüssen des Signalgebers 7, bei denen ebenfalls impulsweise die Spannung am Signalanschluß 2 herabgesetzt wird. Diese Spannungsreduktionen werden vom Signalempfänger 14 erkannt und ausgewertet.

Die für das einwandfreie Funktionieren aller Einrichtungen erforderliche Trennung zwischen Analogsignalen (tonfrequente Signale) und Digitalsignalen beim Erkennen durch die diversen Empfänger kann einmal dadurch erfolgen, daß die Spannungsamplituden der tonfrequenten Signale wesentlich geringer sind (z.B. 2 V) als die Spannung der Digitalsignale (z.B. 5 V), wobei die Ansprechschwelle des Digitalsignalempfängers entsprechend angehoben ist. Anderseits kann auch die analoge Signalspannung einen hohen Gleichspannungspegel erhalten und dafür die Empfänger für Digitalsignale mit Schutzdioden versehen werden.

## Patentansprüche

1. Anordnung zur Prüfung und Einstellung von Rundsteuerempfängern mittels tonfrequenter Prüftelegramme und mittels digitaler Datenein- und -ausgabe, wobei am Rundsteuerempfänger (1) ein gemeinsamer Signalanschluß (2) sowohl für die Eingabe von Prüftelegrammen als auch für die Ein- und Ausgabe von Digitalsignalen vorgesehen ist, **dadurch gekennzeichnet,** daß die Werte der die Prüftelegramme einerseits und die Digitalsignale anderseits repräsentierenden Spannungen stark unterschiedliche Signalpegel aufweisen, wobei wechselseitige Störungen der auf diese unterschiedlichen Spannungen ansprechenden Einrichtungen (11,14) durch erhöhte Ansprechschwellwerte oder durch Schutzdioden (21,25) unterbunden sind.

2. Anordnung nach Anspruch 1, **dadurch gekennzeichnet,** daß zur Unterscheidung zwischen Digitalsignalen und tonfrequenten Signalen eine den letzteren überlagerte Signalgleichspannung (16) dient.

3. Anordnung nach Anspruch 1, **dadurch gekennzeichnet,** daß zur Unterscheidung zwischen Digitalsignalen und tonfrequenten Signalen der Signalpegel der letzteren kleiner ist als die Schaltschwelle der auf die Digitalsignale ansprechenden Einrichtungen (14).

4. Anordnung nach einem der vorhergehenden Ansprüche, **dadurch gekennzeichnet,** daß der gemeinsame Signalanschluß (2) zusammen mit den übrigen Klemmen des Rundsteuerempfängers (1) im oleichen Klemmenbereich angeordnet ist.

5. Anordnung nach einem der vorhergehenden Ansprüche, **dadurch gekennzeichnet,** daß eine Signal-Gleichspannungsquelle (8) über den gemeinsamen Signalanschluß (2) zusätzlich die Spannungsversorgung des Rundsteuerempfängers (1) im Prüfzustand herstellt.

## Claims

1. An arrangement for testing and adjusting ripple control receivers by means of audio-frequency test messages and by means of digital data input and output, a joint signal connection (2) being provided on the ripple control receiver (1) both for the input of test messages and for the input and output of digital signals, characterized in that the values of the voltages representing the test messages on the one hand and the digital signals on the other hand have very different signal levels, mutual disturbance of the devices (11, 14) responding to these different voltages being prevented by raised response threshold values or by protective diodes (21, 25).

2. An arrangement according to claim 1, characterized in that, to distinguish between the digital signals and audio-frequency signals, there is used a direct signal voltage (16) superposed on the latter.

3. An arrangement according to claim 1, characterized in that, to distinguish between digital signals and audio-frequency signals, the signal level of the latter is lower than the switching threshold of the devices (14) responding to the digital signals.

4. An arrangement according to any one of the preceding claims, characterized in that the joint signal connection (2) is arranged together with the other terminals of the ripple control receiver (1) in the same terminal area.

5. An arrangement according to any one of the preceding claims, characterized in that a direct signal voltage source (8) additionally produces the voltage supply of the ripple control receiver (1) in the test state via the joint signal connection (2).

## Revendications

1. Dispositif de vérification et de réglage de récepteurs de télécommande centralisée au moyen de télégrammes d'essai à audiofréquence et au moyen d'entrée et de sortie de données numériques, un branchement de signaux (2) commun étant prévu sur le récepteur de télécommande centralisée (1) pour l'entrée de télégrammes d'essai ainsi que pour l'entrée et la sortie de signaux numériques, caractérisé en ce que les valeurs des tensions représentant les télégrammes d'essai d'une part et les signaux numériques d'autre part présentent un niveau de signal très différent, des perturbations réciproques des dispositifs (11, 14), réagissant à ces différentes tensions, étant interdites par des valeurs seuils de réponse accrues ou par des diodes de protection (21, 25).

2. Dispositif selon la revendication 1, caractérisé en ce que pour distinguer les signaux numériques des signaux à audiofréquence, on a recours à une tension continue de signal (16) superposée à ces derniers.

3. Dispositif selon la revendication 1, caractérisé en ce que pour distinguer les signaux numériques des signaux à audiofréquence, le niveau de signal de ces derniers est inférieur au seuil de commutation des dispositifs (14) réagissant aux signaux numériques.

4. Dispositif selon l'une des revendications précédentes, caractérisé en ce que le branchement de signal (2) commun est prévu dans la même zone de bornes que les autres bornes du récepteur de télécommande centralisée (1).

5. Dispositif selon l'une des revendications précédentes, caractérisé en ce qu'une source de tension continue de signal (8) réalise en supplément, par le branchement de signal (2) commun, l'alimentation en tension du récepteur de télécommande centralisée (1), à l'état d'essai.
